# EUROPEAN PATENT APPLICATION

(11) **EP 3 147 895 A1**
(43) Date of publication of application: **29.03.2017**
(21) Application number: 16188808.6
(22) Date of filing: 14.09.2016
(51) Int. Cl.: G09G 5/12

(54) **DISPLAY APPARATUS AND METHOD FOR CONTROLLING DISPLAY APPARATUS THEREOF**

(30) Priority: 23.09.2015 KR 20150134401
(71) Applicant: Samsung Electronics Co., Ltd., Suwon-si, Gyeonggi-do 16677 (KR)
(72) Inventor: YU, Dong-hoon, Daegu (KR); PARK, Sang-hyurk, Gyeonggi-do (KR); CHUNG, Jae-wook, Seoul (KR); CHO, Sung-duk, Gyeonggi-do (KR)
(74) Representative: Appleyard Lees IP LLP

(57) **Abstract**

A display apparatus and a method for controlling the display apparatus are provided. The display apparatus includes a display configured to display an image and a processor configured to determine a relative direction of an audio source with respect to a user by analyzing an audio signal that relates to the image, and to control the display to display a user interface element that corresponds to the audio source on an area that corresponds to the determined direction of the audio source.

## Description

### CROSS-REFERENCE TO RELATED APPLICATIONS

This application claims priority from Korean Patent Application No. 10-2015-0134401, filed in the Korean Intellectual Property Office on September 23, 2015, the disclosure of which is incorporated herein by reference in its entirety.

### BACKGROUND

### 1. Field

Apparatuses and methods consistent with exemplary embodiments relate to a display apparatus and a controlling method thereof, and more particularly, to a display apparatus which analyzes an audio signal that relates to an image and provides a User Interface (UI) that corresponds to the audio source and a controlling method thereof.

### 2. Description of the Related Art

Recently, various applications can be executed by using a display apparatus. In particular, when a game application is performed by using a display apparatus, a user may wish to know the source of an audio in the game application. For example, if a First-Person Shooter (FPS) game application is being executed, a user may wish to know the directions of various audio sources with respect to the user (for example, shooting sound, footstep sound, etc.).

In addition, if a hearing-impaired person watches an image, it may be difficult to determine the location of an audio source that is associated with the image solely by watching the image.

Accordingly, a method for providing information regarding the direction of an audio source that is associated with an image visually is required.

### SUMMARY

One or more exemplary embodiments provide a display apparatus which determines the direction of an audio source with respect to a user by analyzing an audio signal that relates to an image and provides a UI element that corresponds to the audio source in an area that corresponds to the determined direction of the audio source so as to visually indicate the direction of the audio source and a method for controlling the display apparatus.

According to an aspect of an exemplary embodiment, there is provided a display apparatus including a display configured to display an image and a processor configured to determine a relative direction of an audio source with respect to the displayed image by analyzing an audio signal that relates to the image, and to control the display to display a graphic image that corresponds to the audio source in an area that corresponds to the determined direction of the audio source.

In response to the audio signal being an audio signal which includes a plurality of channels, the processor may be further configured to determine the direction of the audio source by comparing a respective intensity of a corresponding audio signal of each of the plurality of channels.

The processor may be further configured to determine a type of the audio source by analyzing a frequency component of an audio signal that relates to the image, and to control the display to display a graphic image that includes an indicator which indicates the determined type of the audio source in an area that corresponds to the determined direction of the audio source.

The processor may be further configured to control the display to display each respective one of a plurality of graphic images on a corresponding one from among a plurality of areas of the image, and to control the display to distinctively display a graphic image which is located at an area that corresponds to the determined direction of the audio source with respect to a display of a plurality of other graphic images.

The processor may be further configured to determine a volume level of an audio that corresponds to the audio source, and to control the display to adjust and display a size of the graphic image based on the determined volume level.

The processor may be further configured to control the display to display a graphic image that corresponds to the audio source while an audio that corresponds to the audio source is being output.

In response to a movement of the audio source, the processor may be further configured to control the display to move and display the graphic image based on the movement of the audio source.

The processor may be further configured to obtain subtitle information that corresponds to a voice which is uttered by the audio source, and to control the display to display a subtitle that corresponds to the audio source on the area that corresponds to the determined direction of the audio source.

The processor may control the display to determine a type of the audio source, and select and display one of a graphic image from among a plurality of graphic images corresponding to the plurality of audio sources according to the determined type of the audio source.

According to an aspect of another exemplary embodiment, there is provided a method for controlling a display apparatus, the method including displaying an image, determining a relative direction of an audio source with respect to the displayed image by analyzing an audio signal that relates to the image, and displaying a graphic image that corresponds to the audio source in an area that corresponds to the determined direction of the audio source.

In response to the audio signal being an audio signal which includes a plurality of channels, the determining may include determining the direction of the audio source by comparing a respective intensity of a corresponding audio signal of each of the plurality of channels.

The method may further include determining a type of the audio source by analyzing a frequency component of the audio signal that relates to the image, and the displaying the graphic image may include displaying a graphic image that includes an indicator which indicates the determined type of the audio source in the area that corresponds to the determined direction of the audio source.

The displaying an image may include displaying each respective one from among a plurality of graphic images on a corresponding one from among a plurality of areas of the image, and the displaying a graphic image may include distinctively displaying a graphic image which is located at an area that corresponds to the determined direction of the audio source with respect to a display of a plurality of other graphic images.

The method may further include determining a volume level of an audio that corresponds to the audio source, and the displaying the graphic image may include adjusting and displaying a size of the graphic image based on the determined volume level.

The displaying the graphic image may include displaying the graphic image that corresponds to the audio source while an audio that corresponds to the audio source is being output.

The displaying the graphic image may include moving and displaying the graphic image in response to a movement of the audio source based on the movement of the audio source.

The method may further include obtaining subtitle information that corresponds to a voice which is uttered by the audio source, and the displaying the graphic image may include displaying a subtitle that corresponds to the audio source on the area that corresponds to the determined direction of the audio source.

The method further include determining a type of the audio source, wherein the displaying the graphic image may include selecting and displaying one of a plurality of graphic images corresponding to the plurality of audio sources according to the determined type of the audio source.

According to an aspect of another exemplary embodiment, there is provided a non-transitory computer-readable recording medium including a program which performs a method for controlling a display apparatus, the controlling method including displaying an image, determining a relative direction of an audio source with respect to a user by analyzing an audio signal that relates to the image, and display a UI element that corresponds to the audio source in an area that corresponds to the determined direction of the audio source.

### BRIEF DESCRIPTION OF THE DRAWINGS

The above and/or other aspects will be more apparent by describing certain exemplary embodiments with reference to the accompanying drawings, in which:
FIG. 1 is a block diagram illustrating a configuration of a display apparatus, according to an exemplary embodiment;
FIG. 2 is a block diagram illustrating a detailed configuration of a display apparatus, according to an exemplary embodiment;
FIG. 3 is a block diagram illustrating a detailed configuration of a storage, according to an exemplary embodiment;
FIGS. 4A, 4B, 4C, 5, 6A, 6B, 7, 8A, 8B, 8C, and 9 are views provided to explain exemplary embodiments within which a UI element is provided on an area that corresponds to the direction of an audio source, according to various exemplary embodiments; and
FIG. 10 is a flowchart provided to explain a method for controlling a display apparatus, according to an exemplary embodiment.

### DETAILED DESCRIPTION

The terms used in this specification will be briefly explained and the present disclosure will be explained in detail.

The terms used in the exemplary embodiments are general terms which are widely used now and selected considering the functions of the exemplary embodiments. However, the terms may vary depending on the intention of a person of skill in the art, a precedent, or the advent of new technology. In addition, in a specified case, the term arbitrarily selected by the applicant may be used. In this case, the meaning of the term will be explained in the corresponding description. Therefore, the terms used in the present disclosure should be defined based on the meanings of the terms and the descriptions made herein, rather than the names of the terms.

The exemplary embodiments may vary, and may be provided in different exemplary embodiments. Specific exemplary embodiments will be described with reference to accompanying drawings and detailed explanation. However, this does not necessarily limit the scope of the exemplary embodiments to a specific embodiment form. Instead, modifications, equivalents and replacements included in the disclosed concept and technical scope of this specification may be employed. While describing exemplary embodiments, if it is determined that the specific description regarding a known technology obscures the gist of the invention, the specific description is omitted.

In the present disclosure, relational terms such as first and second, and the like, may be used to distinguish one entity from another entity, without necessarily implying any actual relationship or order between such entities.

The terms used in the following description are provided to explain a specific exemplary embodiment and are not intended to limit the scope of rights. A singular term includes a plural form unless it is intentionally written that way. The terms "include", "comprise", "is configured to", etc. of the description are used to indicate that there are features, numbers, steps, operations, elements, parts or combination thereof, and they should not exclude the possibilities of combination or addition of one or more features, numbers, steps, operations, elements, parts or combination thereof.

In an exemplary embodiment, a "module" or a "unit" performs at least one function or operation, and may be realized as hardware, software, or a combination thereof. In addition, a plurality of "modules" or a plurality of "units" may be integrated into at least one module and may be realized as at least one processor (not shown), except for "modules" or "units" that should be realized in a specific hardware.

It will be understood that, when an element is "connected" with another element, the element may be "directly connected" with another element, and also, the element may be "electrically connected" with another element with an intervening element therebetween. In addition, it will be understood that, when a certain part "includes" a certain element, the certain part may not exclude another element and may further include another element unless this term is defined otherwise.

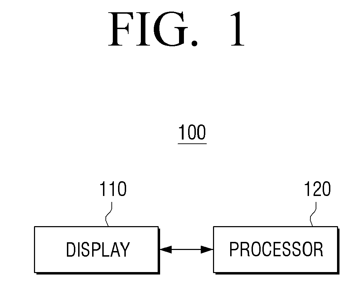

Hereinafter, the exemplary embodiments will be described in greater detail with reference to the accompanying drawings. FIG. 1 is a block diagram illustrating a configuration of a display apparatus 100, according to an exemplary embodiment. As illustrated in FIG. 1, the display apparatus 100 includes a display 110 and a processor 120. In this case, the display apparatus 100 may be realized as a smart television (TV), but this is only an example. The display apparatus 100 may be realized as any of various electronic apparatuses with a display, such as smart phone, tablet personal computer (PC), notebook PC, desktop PC, etc.

The display 110 displays image data and various user interfaces (UIs) under the control of the processor 120. In particular, the display 110 may display a UI element in an area that corresponds to the relative direction of an audio source in the image. In this case, the UI element may be provided to distinctively display the area that corresponds to the direction of the audio source with respect to other areas, but this is only an example, and the UI element may be realized as an graphic image that corresponds to the audio source.

The processor 120 controls the overall operations of the display apparatus 100. In particular, the processor 120 may be configured to analyze an audio signal that relates to an image in order to determine the relative direction with respect to the displayed image, and to control the display 110 to display a UI element(or graphic image) that corresponds to the audio source in an area that corresponds to the determined direction of the audio source.

In particular, the processor 120 may be configured to analyze an audio signal that relates to an image in order to determine the relative direction of the audio source which is generating the audio signal. In this case, the audio signal may include a plurality of channels (for example, 5.1 channel, 2.1 channel, etc.), and the audio source may be an object which generates the audio in the image, such as a gun, a bird, people, etc. In particular, the processor 120 may compare the intensity of a respective audio signal in each of the plurality of channels to determine the direction of the audio source. For example, if the audio signal of an image is an audio signal of the 2.1 channel and the intensity of the audio signal in the left channel is greater than the intensity of the audio signal in the right channel, the processor 120 may determine the direction of the audio source as the left direction.

In addition, the processor 120 may control the display 110 to display a UI element in an area that corresponds to the determined direction of the audio source. In this case, the processor 120 may control the display 110 to display a plurality of respective UI elements in a plurality of corresponding areas of the image before an audio signal is input. After an audio signal is input, if the direction of the audio source is determined, the processor 120 may control the display 110 to distinctively display a UI element in an area that corresponds to the direction of the audio source with respect to the displays of other UI elements.

In particular, the processor 120 may determine the type of an audio source by analyzing the frequency components of the audio signal of an image, and control the display 110 to display a UI element that includes an indicator which indicates the type of the audio source in an area that corresponds to the determined direction of the audio source. For example, if it is determined that an audio source is a gun based on the analysis on the frequency components of the audio signal of an image, the processor 120 may control the display 110 to display a UI element that includes an indicator in the shape of a bullet.

In addition, the processor 120 may determine the volume level of audio that corresponds to an audio source, and control the display 110 to adjust and display the size of a UI element based on the determined volume level. For example, the processor 120 may control the display 110 to increase the size of the UI element as the volume level of audio that corresponds to the audio source increases.

Further, the processor 120 may control the display 110 to display a UI element that corresponds to the audio source while audio that corresponds to the audio source is being output. In particular, if the audio that corresponds to the audio source disappears, the processor 120 may control the display 110 to remove the UI element that corresponds to the audio source.

If the audio source moves while the audio that corresponds to the audio source is being output, the processor 120 may control the display 110 to move and display the UI element based on the movement of the audio source.

Further, if the audio source is a person and the audio that corresponds to the audio source is a human voice, the processor 120 may obtain subtitle information that corresponds to a voice generated from the audio source, and control the display 110 to display a subtitle that corresponds to the audio source in an area that corresponds to the determined direction of the audio source.

According to the above-described various exemplary embodiments, a user may visually check the location of an audio source that relates to an image.

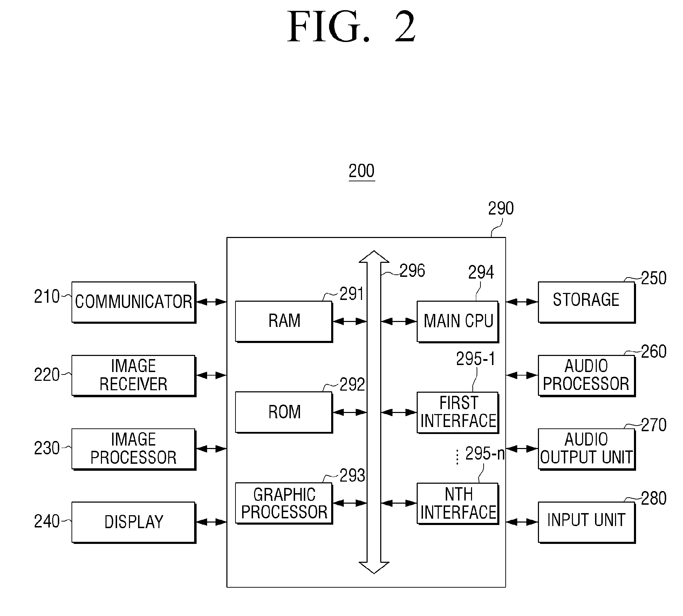

FIG. 2 is a block diagram illustrating a detailed configuration of a display apparatus 200, according to an exemplary embodiment. As illustrated in FIG. 2, the display apparatus 200 includes a communicator 210, an image receiver 220, an image processor 230, a display 240, a storage 250, an audio processor 260, an audio output unit 270, an input unit 280, and a processor 290.

The communicator 210 is an element which is configured for communicating with various kinds of external apparatuses according to various kinds of communication methods. The communicator 210 may include any of various communication chips, such as, for example, a wireless fidelity (WiFi) chip, a Bluetooth chip, a Near Field Communication (NFC) chip, a wireless communication chip, an infrared (IR) chip, etc. In this aspect, each of the WiFi chip, the Bluetooth chip, the NFC chip, and the IR chip performs communication by using a WiFi method, a Bluetooth method, an NFC method, and an IR method, respectively. The NFC chip refers to a chip which operates in the NFC method using a band of 13.56 MHz from among various radio frequency identification (RFID) frequency bands, such as 135 kHz, 13.56 MHz, 433 MHz, 860-960 MHz, 2.45 GHz, etc. When the WiFi chip or the Bluetooth chip is used, a variety of connectivity information, such as, for example, service set identifier (SSID) and a session key, may be transmitted and received first, and communication is established using the connectivity information, and then a variety of information may be transmitted and received. The wireless communication chip refers to a chip which performs communication according to various communication standards, such as, for example IEEE, Zigbee, 3rd Generation (3G), 3rd Generation Partnership Project (3GPP), Long Term Evolution (LTE), etc.

In particular, the communicator 210 may obtain image content (for example, a game content) from an external server. In addition, the communicator 210 may transmit , to the external server, information that relates to the frequency components of an audio source, and receive, from the external server, information that relates to the type of the audio source in correspondence with the frequency components.

The image receiver 220 receives image content from various external sources. In particular, the image receiver 220 may receive a plurality of broadcast contents from an external broadcasting station. In addition, the image receiver 220 may receive various image contents from an external apparatus (for example, a server, a digital versatile disk (DVD), and etc.). In this case, the image contents may include various types of data, such as image data, audio data and subtitle data.

The image processor 230 processes image data which is received by the image receiver 220. The image processor 230 may perform various image processing functions with respect to image data, such as decoding, scaling, noise filtering, frame rate conversion, resolution conversion, etc.

The display 240 displays at least one of a video frame which is generated by processing image data received from the image receiver 220 and various screens generated by the graphic processor 293. In particular, the display 240 may display a plurality of respective UI elements in a plurality of corresponding areas of an image, and display the UI elements located at areas that correspond to the direction of an audio source distinctively with respect to displays of other UI elements. Alternatively, the display 240 may generate and display a UI element in an area that corresponds to the direction of an audio source. In addition, the display 240 may display an indicator that corresponds to the type of the audio source within the UI element. The display 240 may adjust the size of the UI element based on the volume level of audio that corresponds to the audio source.

The storage 250 may store various programs and data which are required for the operations of the display apparatus 200. The storage 250 may be realized as non-volatile memory, volatile memory, flash memory, hard-disk drive (HDD), solid-state drive (SSD), etc. The storage 250 is accessible by the processor 290, and data may be read/recorded/deleted/updated by the processor 290. The term of memory in this specification may include the storage 250, a read-only memory (ROM) 292 or a random access memory (RAM) 291 of the processor 290, or a memory card (not shown) (for example, a micro SD card and a memory stick) which is mounted on the display apparatus 200.

In addition, the storage 250 may store programs, data, and other suitable entities in order to configure various screens to be displayed in a display area of the display 240.

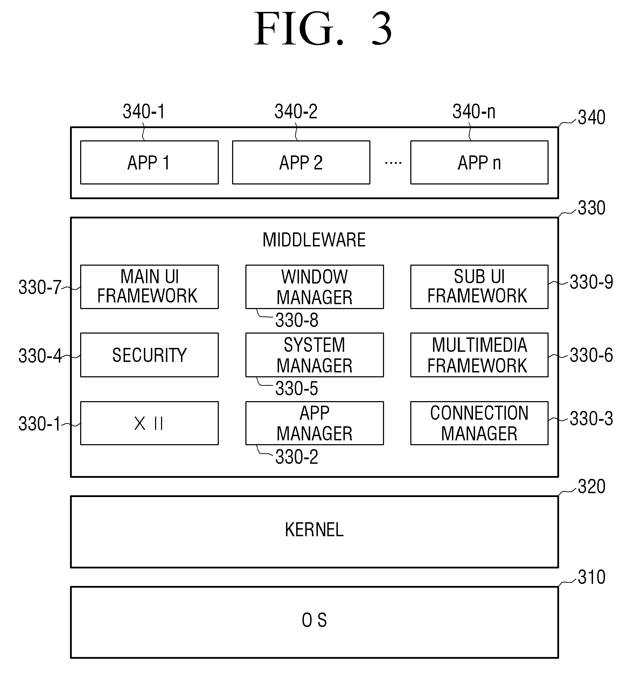

Hereinafter, the structure of software stored in the storage 250 will be described with reference to FIG. 3. Referring to FIG. 3, the storage 250 may store software which includes an operating system (OS) 310, a kernel 320, middleware 330, an application 340, and other forms of software.

The operating system (OS) 310 controls and manages the overall operations of hardware. In particular, the OS 310 performs basic functions such as hardware management, memory, security, etc.

The kernel 320 serves as a path for transmission of various signals, including a touch signal detected by the input unit 280, to the middleware 330.

The middleware 330 includes various software modules which are configured to control the operations of the display apparatus 200. According to FIG. 3, the middleware 330 includes an X11 module 330-1, an APP manager 330-2, a connection manager 330-3, a security module 330-4, a system manager 330-5, a multimedia framework 330-6, a main UI framework 330-7, a window manager 330-8, and a sub UI framework 330-9.

The X11 module 330-1 is a module which receives various event signals from a variety of hardware provided in the display apparatus 200. The event recited herein may vary, and may include, for example, any of an event in which a user gesture is detected, an event in which a system alarm occurs, an event in which a specific program is executed or finished, and/or other types of events.

The APP manager 330-2 is a module which manages the execution states of various applications 340 installed in the storage 250. In response to detecting an application execution event from the X11 module 330-1, the APP manager 330-2 may call an application that corresponds to the detected event and execute the application.

The connection manager 330-3 is a module which is configured for supporting wired or wireless network connection. The connection manager 330-3 may include various specific modules, such as, for example, a DNET module, a universal plug-and-play (UPnP) module, and other types of modules that relate to connectivity.

The security module 330-4 is a module which is configured for supporting certification of hardware, permission, secure storage, and other security-related functions.

The system manager 330-5 monitors the states of the respective elements in the display apparatus 200, and provides the result of the monitoring to the other modules. For example, when battery power is low, an error occurs, or communication is disconnected, the system manager 330-5 may provide the result of the monitoring to the main UI framework 330-7 or the sub UI framework 330-9, and may output a corresponding notification message or a notification sound.

The multimedia framework 330-6 is a module which is configured for reproducing multimedia contents which are stored in the display apparatus 200 or received from an external source. The multimedia framework 330-6 may include a player module, a camcorder module, a sound processing module, and/or other suitable types of modules. Accordingly, the multimedia framework 330-6 may reproduce various multimedia contents in order to generate and reproduce a screen and a sound.

The main UI framework 330-7 is a module which is configured for providing various Uls to be displayed in a main area of the display 210, and the sub UI framework 330-9 is a module which is configured for providing various Uls to be displayed in a subordinate area. The main UI framework 330-7 and the sub UI framework 330-9 may include an image compositor module which is designed for configuring various UI elements, a coordinate compositor module which is configured for calculating coordinates at which an UI element is displayed, a rendering module which is configured for rendering the configured UI element at the calculated coordinates, and a 2D/3D UI toolkit which is configured for providing a tool for configuring a UI in the form of a two-dimensional (2D) UI or a three-dimensional (3D) UI.

The window manager 330-8 may detect a touch event which is caused by a user's body or a pen or other input events. In response to a detection of such an event, the window manager 330-8 may transmit an event signal to the main UI framework 330-7 or the sub UI framework 330-9, so that an operation that corresponds to the detected event is performed.

In addition, various program modules, for example, a hand-writing module configured for drawing a line by tracing a dragging operation when the user touches and drags on the screen, or an angle calculation module configured for calculating a pitch angle, a roll angle, and a yaw angle based on a sensor value detected by a motion sensing unit, may be stored in the display apparatus 200.

The application module 340 includes applications 340-1 to 340-n which are respectively configured to support various functions. For example, the application module 340 may include a program module configured for providing various services, such as a navigation program module, a game module, an electronic book module, a calendar module, a notification management module, a music play module, etc. The applications may be installed as a default system configuration, or may be arbitrarily installed by the user as desired. Referring also to FIG. 2, in response to a selection of a UI element, a main central processing unit (CPU) 294 may execute an application that corresponds to the selected UI element by using the application module 340.

The software structure shown in FIG. 3 is merely an example and the software is not limited to this structure. Therefore, some of the software elements may be omitted or changed, or an another element may be added, according to the type of the display apparatus 200 or the purpose of the display apparatus 200. For example, the storage 250 may further include various programs, such as, for example, any of a sensing module configured to analyze signals sensed by various sensors, a messaging module including a messenger program, a text message program, an e-mail program, a call information aggregator program module, a voice-over Internet protocol (VoIP) module, a web browser module, and/or any other suitable type of program.

In addition, the storage 250 may match and store a graphic image corresponding to a plurality of audio sources. At this time, the corresponding graphic image may include an indicator indicating the corresponding audio source, but this is merely exemplary and a text or an icon indicating an audio source may be further included.

Referring again to FIG. 2, the audio processor 260 processes audio data. The audio processor 260 may perform various processing functions with respect to audio data, such as decoding, amplification, noise filtering, and/or any other suitable audio processing function. The audio data processed by the audio processor 260 may be output to the audio output unit 270. In addition, the information that relates to the audio data processed by the audio processor 260 may be output to the processor 290.

The audio output unit 270 outputs not only various audio data processed by the audio processor 260, but also various alarm sounds and/or a voice message.

The input unit 280 receives various user commands which relate to controlling the display apparatus 200. In this case, the input unit 280 may be realized as a pointing device which includes a motion sensor configured to move a remote controller that includes four direction keys or a pointer, but this is only an example. The input unit 280 may be realized as any of various input apparatuses, such as keyboard, mouse, motion input unit, voice input unit, touch sensor, and/or any other suitable device.

The processor 290 controls the overall operations of the display apparatus 200 by using various programs stored in the storage 250.

As illustrated in FIG. 2, the processor 290 may include a RAM 291, a ROM 292, a graphic processor 293, a main CPU 294, first to n-th interfaces 295-1 to 295-n, and a bus 296. In this aspect, the RAM 291, the ROM 292, the graphic processor 293, the main CPU 294, and the first to n-th interfaces 295-1 to 295-n may be connected with one another via the bus 296.

The ROM 292 stores a set of commands for booting a system. In response to a turn-on command being inputted and power being supplied, the main CPU 294 copies the operating system (O/S) stored in the storage 250 into the RAM 291 based on a command stored in the ROM 292, and boots the system by executing the O/S. In response to a completion of the booting operation, the main CPU 294 copies various application programs stored in the storage 250 into the RAM 291, and performs various operations by executing the application programs copied into the RAM 291.

The graphic processor 293 generates a screen that may include any of various objects, such as an icon, an image, a text, etc., by using a calculator (not shown) and a renderer (not shown). The calculator (not shown) may calculate attribute values of objects to be displayed in accordance with a layout of the screen, such as a coordinate value, a shape, a size, a color, and/or any other attribute, based on a control command received from the input unit. The renderer (not shown) generates the screens of various layouts which include the objects based on the attribute values calculated by the calculator (not shown). The screen generated by the renderer (not shown) may be displayed in the display area of the display 240.

The main CPU 294 accesses the storage 250 and performs the booting operation by using the O/S stored in the storage 250. In addition, the main CPU 294 performs various operations using various programs, content, data, and/or any other items which are stored in the storage 250.

The first to n-th interfaces 295-1 to 295-n are connected with the above-described various elements. One of the first to n-th interfaces 295-1 to 295-n may be a network interface which is connected with an external device via a network.

In particular, the processor 290 may determine the direction of an audio source which relates to an image by analyzing an audio signal that relates to the image and is generated by the audio source, and control the display 240 to display a UI element that corresponds to the audio source in an area that corresponds to the determined direction of the audio source.

More particularly, the processor 290 may control the display 240 to display an image received via the image receiver 220. In this case, the image may include a game image. In addition, the audio signal that relates to an image may include a plurality of channels.

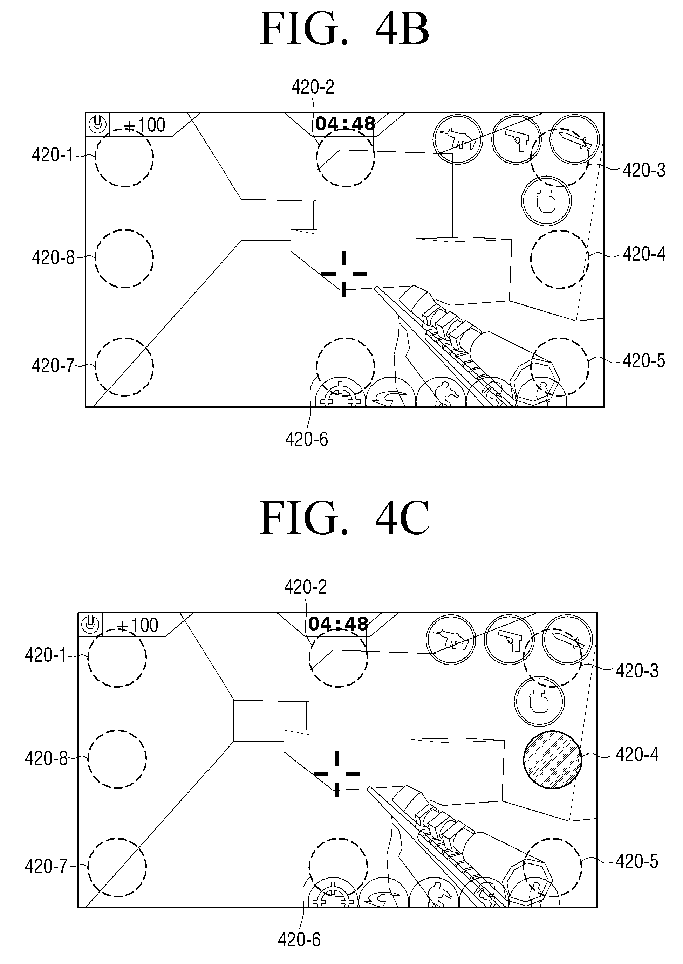

When operating in a mode that corresponds to providing a UI which guides the direction of an audio source, the processor 290 may control the display 240 to display a plurality of respective UI elements 420-1 to 420-8 in a plurality of corresponding areas of an image, as illustrated in FIG. 4B.

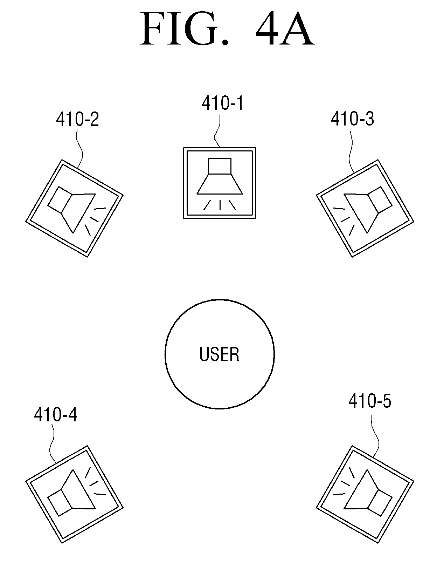

Further, in an exemplary embodiment, a composite audio signal may include audio signals of five channels, as illustrated in FIG. 4A. In particular, a first signal 410-1 of a center channel, a second audio signal 410-2 of a front left channel, a third audio signal 410-3 of a front right channel, a fourth audio signal 410-4 of a rear left channel, and a fifth audio signal 410-5 of a rear right channel may be included.

The processor 290 may determine the location of an audio source included in an image by analyzing the intensity of a received composite audio signal of a plurality of channels. In particular, if input audio signals are digital signals, the processor 290 may calculate the respective intensity of each of the audio signals of a plurality of channels via an computing unit by parsing the respective intensity information of each of the audio signals of the plurality of channels. In addition, if input audio signals are analog signals, the processor 290 may convert the audio signals of the plurality of channels via Analog to Digital (ADC) processing, perform sampling of the digitized audio signals of the plurality of channels, and calculate the respective intensity of each of the audio signals of the plurality of channels via the computing unit by parsing the respective intensity information of each of the audio signals of the plurality of channels.

In addition, the processor 290 may determine the direction (or the location) of an audio source included in an image based on the calculated intensity of the audio signals of the plurality of channels. In particular, the processor 290 may determine that the audio source is located at an area that corresponds to the loudest audio signal from among the audio signals of the plurality of channels. For example, if the intensity of the second audio signal 410-2 is greater than the respective intensity of each of the third, fourth, and fifth audio signals 410-3, 410-4, and 410-5, the processor 290 may determine that the direction of the audio source is a northwest direction relative to the location of a user. Alternatively, if the intensity of the third audio signal 410-3 is greater than the intensities of the second audio signal 410-2, the fourth audio signal 410-4, and the fifth audio signal 410-5, the processor 290 may determine that the direction of the audio source is a northeast direction with reference to the location of the user. If the intensity of the second audio signal 410-2 and the intensity of fourth audio signal 410-4 are greater than the intensity of the third audio signal 410-3 and the intensity of the fifth audio signal 410-5, the processor 290 may determine that the direction of the audio source is a leftward direction with respect to the location of the user. Alternatively, if the intensity of the second audio signal 410-2 and the intensity of the third audio signal 410-3 are greater than the intensity of the fourth audio signal 410-4 and the intensity of the fifth audio signal 410-5, the processor 290 may determine that the direction of the audio source is a frontward direction with reference to the location of the user.

In addition, the processor 290 may control the display 240 to display a UI element in an area that corresponds to the determined direction of an audio source, which is determined based on the respective intensities of the audio signals of a plurality of channels. For example, as illustrated in FIG. 4B, if an audio output is generated from an audio source (for example, a gun sound, etc.) while UI elements 420-1, 420-2, 420-3, 420-4, 420-5, 420-6, 420-7, and 420-8 (as indicated in the figure by dotted-line circles) are displayed, the processor 290 may determine that the direction of the audio source is a rightward direction relative to the location of the user. If it is determined that the direction of the audio source is a rightward direction relative to the location of the user, the processor 290 may control the display 240 to distinctively display the fourth element 420-4 as compared to displays of the other UI elements, as illustrated in FIG. 4C. In this case, displaying a UI element distinctively may include displaying the UI element distinctively with respect to at least one quality from among color, brightness, chroma, transparency, flickering, etc.

Accordingly, as illustrated in FIG. 4C, as the fourth UI element 420-4 is displayed distinctively with respect to displays of the other UI elements, a user may be able to visually check the direction of an audio source.

In addition, the processor 290 may determine the type of an audio source by analyzing the frequency components of an audio signal that relates to an image, and control the display 240 to display a UI element that includes an indicator which represents the type of the audio source in an area that corresponds to the determined direction of the audio source.

In particular, as illustrated in FIG. 4B, if an audio is generated from an audio source while an image is displayed, the processor 290 may analyze the frequency of an audio signal that corresponds to the audio source. Subsequently, the processor 290 may compare the frequencies of various types of audio signals that are pre-stored in the storage 250 with the frequency of the audio signal that corresponds to the audio source in order to determine the type of the audio signal. For example, if the frequency of the audio signal that corresponds to the audio source is the first frequency, the processor 290 may determine that the type of the audio source is "gun," based on a match with the pre-stored first frequency. In this case, the frequencies of various types of audio signals may be stored in the storage 250, but this is only an example. For example, as an alternative, the frequencies of various types of audio signals may be stored in an external server.

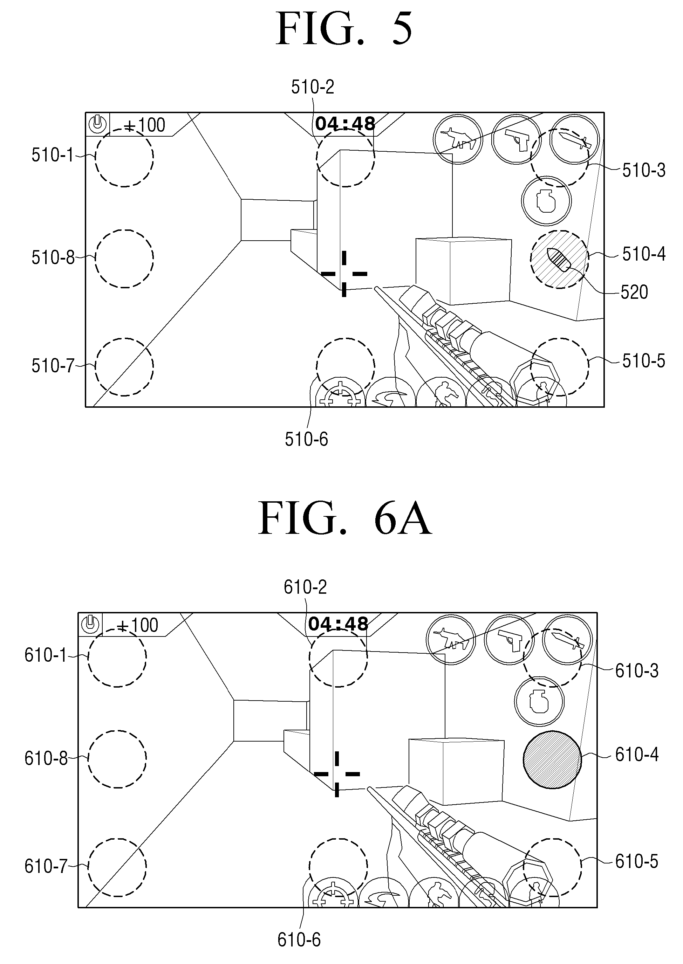

The processor 290 may control the display 240 to display a UI element that includes an indicator which corresponds to the determined type of the audio source. For example, if it is determined that the direction of the audio source is a rightward direction with reference to a user and the type of the audio source is a gun, the processor 290 may control the display 240 to display an indicator 520 in the shape of a bullet in a fourth element 510-4, as illustrated in FIG. 5.

In particular, the processor 290 may control the display 240 to determine a type of the audio source, and select and display one of a plurality of graphic images corresponding to a plurality of audio sources stored in the storage 250 according to determined type of audio source.

Accordingly, as illustrated in FIG. 5, a user may check the UI element 510-4 that includes the indicator 520 in the shape of a bullet, and thus, the user may visually determine the direction and the type of the audio source.

Further, in the above exemplary embodiment, when the type of the audio source is a gun, the indicator is a bullet, but this is only an example. The indicator may be provided in any of various shapes, based on the type of the audio source. For example, if the type of an audio source is the sound of human footsteps, the indicator may be an image of human footsteps; if the type of an audio source is a hand grenade, the indicator may be an image of the hand grenade, and if the type of an audio source is a bird, the indicator may be an image of the bird.

In addition, the processor 290 may determine the volume level of an audio that corresponds to an audio source, and control the display 240 to adjust and display the size of a UI element based on the determined volume level.

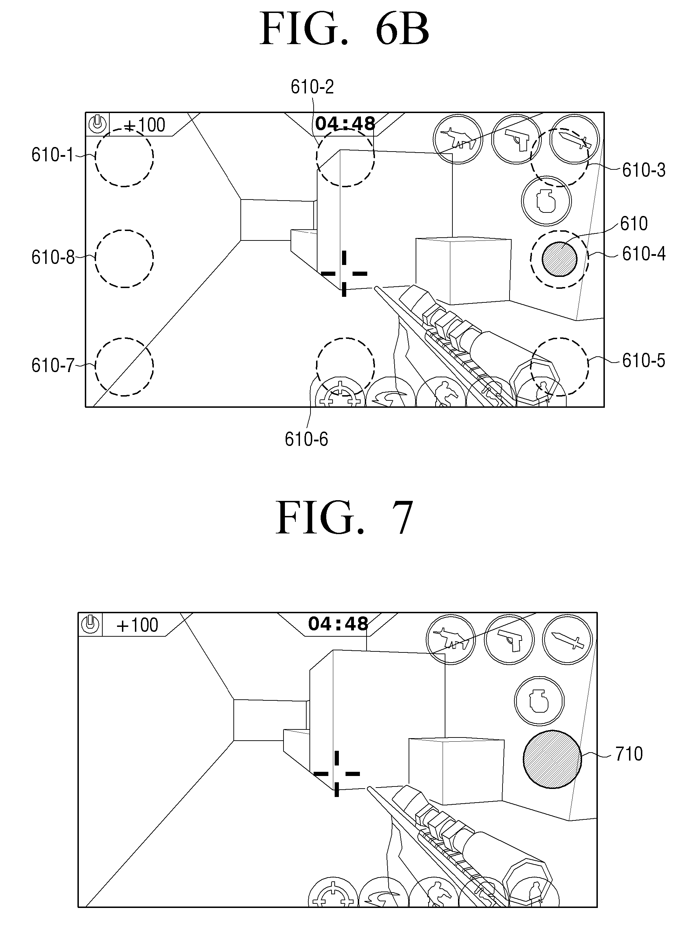

In particular, the processor 290 may control the display 240 to display a UI element such that the higher the volume level of an audio signal that corresponds to an audio source is, the larger the size of the UL element becomes. For example, if the volume level of an audio signal that corresponds to an audio source is a first value, the processor 290 may control the display 240 to display a UI element 610-4 that corresponds to the audio source, as illustrated in FIG. 6A, and if the volume level of an audio signal that corresponds to the audio source is a second value which is smaller than the first value, the processor 290 may control the display 240 to display a UI element 610 as illustrated in FIG. 6B, which is smaller than the UI element illustrated in FIG. 6A.

In addition, the processor 290 may determine the location, size, type, and/or any other suitable characteristic of a UI element that corresponds to an audio source by reflecting an audio that corresponds to the audio source in real time.

In particular, the processor 290 may control the display 240 to display a UI element that corresponds an audio source while an audio that corresponds to the audio source is being output. In this aspect, the processor 290 may control the display 240 to display the UI element that corresponds to the audio source only when an audio that corresponds to the audio source is in the process of being output, and if the output of the audio that corresponds to the audio source is stopped, to remove the UI element from the display.

In addition, if an audio source moves, the processor 290 may control the display 240 to move and display a UI element in accordance with the movement of the audio source. For example, if an audio source moves from right to left with reference to a user, the processor 290 may control the display 240 to display the UI element at the right side and then at the left side in accordance with the movement of the audio source.

Further, the processor 290 may adjust the size of a UI element in real time in accordance with the volume level of an audio source. For example, if the volume level of an audio source becomes gradually lower, the processor 290 may control the display 240 to gradually reduce the size of a UI element that corresponds to the audio source.

According to the above-described various exemplary embodiments, a user may visually check various information that relates to an audio source in an image.

In the above exemplary embodiments, UI elements in the form of a dotted line are continuously displayed in a plurality of areas , but this is only an example. As illustrated in FIG. 7, a UI element in the form of a dotted line may not be continuously displayed and instead, after an audio is generated from an audio source, the processor 290 may control the display 240 to display a UI element 710 only in an area that corresponds to the relative direction of the audio source with respect to a user.

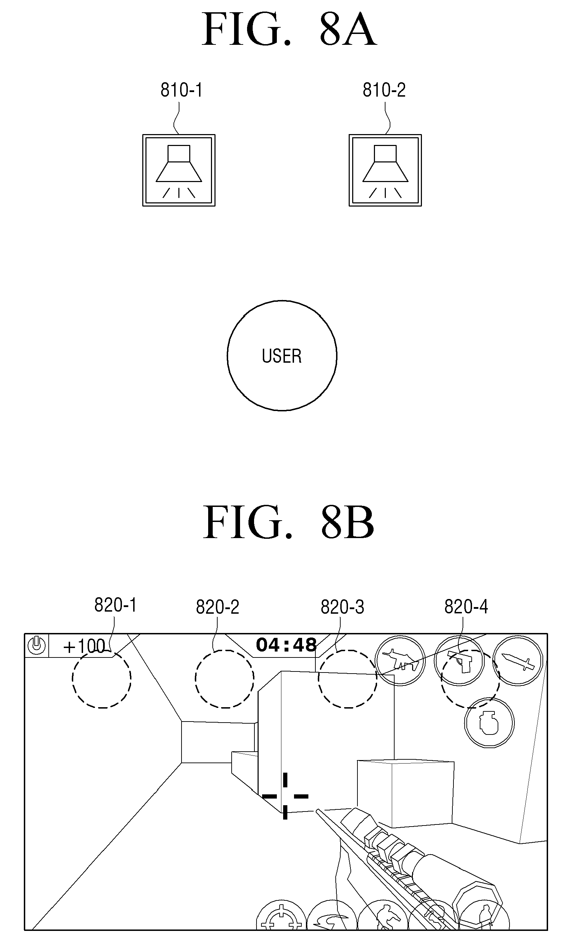

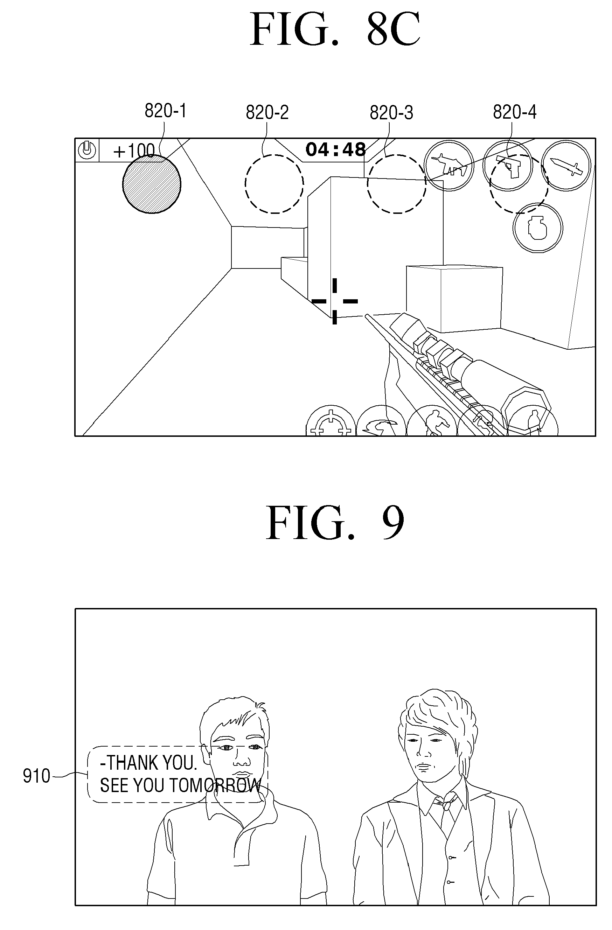

In addition, in the above exemplary embodiments, an audio signal of a 5.1 channel is input, but this is only an example. The technical concept of the present disclosure may also be applied to an exemplary embodiment within which an audio signal of a plurality of different channels is input. For example, as illustrated in FIG. 8A, an audio signal which is input may be an audio signal of a 2.1 channel that includes a left channel 810-1 and a right channel 810-2. If an audio signal of a 2.1 channel is input, the processor 290 may control the display 240 to display a plurality of UI elements 820-1, 820-2, 820-3, and 820-4 in a left and right direction, as illustrated in FIG. 8B. If the intensity of the audio signal 810-1 of the left channel is greater than the intensity of the audio signal 810-2 of the right channel by a predetermined value, the processor 290 may determine that the audio source is located at the left side with reference to a user, and control the display 240 to distinctively display the first UI element 820-1, which is located at the left side with reference to the user, with respect to the displays of other UI elements, as illustrated in FIG. 8C.

In the above exemplary embodiments, a UI element is represented in a single color or as an image, but this is only an example. For example, as an alternative, a UI element may include subtitle information. For example, the processor 290 may obtain subtitle information that corresponds to a voice which is uttered by an audio source that relates to an image by using any of various methods. Subsequently, the processor 290 may determine the direction of an audio source that corresponds to the subtitle information which is obtained by comparing the respective intensity of an audio signal of each of a plurality of channels. The processor 290 may control the display 240 to display the subtitle information in an area that corresponds to the determined direction of the audio source. For example, if it is determined that the audio source is located on the left side with reference to the user, the processor 290 control the display 240 to display a subtitle 910 on the left side of the image, as illustrated in FIG. 9.

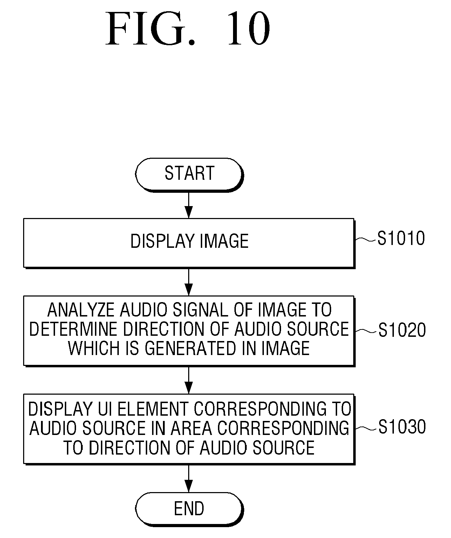

Hereinafter, a method for controlling a display apparatus according to an exemplary embodiment will be described with reference to FIG. 10.

First, in operation S1010, the display apparatus displays an image.

In operation S1020, the display apparatus 100 determines the direction of an audio source which relates to an image by analyzing an audio signal that corresponds to the audio source. In particular, if an audio signal that includes a plurality of channels is input, the display apparatus 100 may determine the direction of the audio source by comparing the respective intensities of the audio signals of the plurality of channels to one another.

In operation S1030, the display apparatus 100 displays a UI element that corresponds to the audio source in an area that corresponds to the determined direction of the audio source. In this case, as described above, the display apparatus 100 may determine various information, such as the type of the audio source, the volume level of an audio that corresponds to the audio source, and/or any other relevant characteristic relating to the audio source or the audio signal, and display a UI element that corresponds to the audio source based on the various information.

As described above, according to the various exemplary embodiments, a user may visually check the location of an audio source that relates to or is included in an image.

The method for controlling a display apparatus according to the above-described various exemplary embodiments may be realized as a program and provided in a display apparatus or an input apparatus. In particular, the program that includes the method for controlling a display apparatus may be stored in a non-transitory computer readable medium and provided therein.

The non-transitory recordable medium refers to a medium which may store data semi-permanently rather than storing data for a short time, such as register, cache, memory, etc. and is readable by an apparatus. In particular, the above-described various applications and programs may be stored and provided in a non-transitory recordable medium such as any of compact disk (CD), digital versatile disk (DVD), hard disk, Blu-ray disk, universal serial bus (USB), memory card, read-only memory (ROM), and/or any other suitable type of medium.

The foregoing exemplary embodiments and advantages are merely exemplary and are not to be construed as limiting the present inventive concept. The present disclosure can be readily applied to other types of apparatuses. Further, the description of the exemplary embodiments is intended to be illustrative, and not to limit the scope of the claims, and many alternatives, modifications, and variations will be apparent to those of ordinary skill in the art.

## Claims

1. A display apparatus comprising:
a display configured to display an image; and
a processor configured to determine a relative direction of an audio source with respect to the displayed image by analyzing an audio signal that relates to the image, and to control the display to display a graphic image in an area that corresponds to the determined direction of the audio source.

2. The apparatus as claimed in claim 1, wherein in response to the audio signal being an audio signal which includes a plurality of channels, the processor is further configured to determine the relative direction of the audio source by comparing a respective intensity of a corresponding audio signal of each of the plurality of channels.

3. The apparatus as claimed in claim 1 or claim 2, wherein the processor is further configured to determine a type of the audio source by analyzing a frequency component of an audio signal that relates to the image, and to control the display to display the graphic image that includes an indicator which indicates the determined type of the audio source in the area that corresponds to the determined direction of the audio source.

4. The apparatus as claimed in any one of claim 1 to claim 3, wherein the processor is further configured to control the display to display each respective one from among a plurality of graphic images on a corresponding one from among a plurality of areas of the image, and to control the display to distinctively display a graphic image which is located at an area that corresponds to the determined direction of the audio source with respect to a display of a plurality of other graphic image.

5. The apparatus as claimed in any one of claim 1 to claim 4, wherein the processor is further configured to determine a volume level of an audio that corresponds to the audio source, and to control the display to adjust and display a size of the graphic image based on the determined volume level.

6. The apparatus as claimed in any one of claim 1 to claim 5, wherein the processor is further configured to control the display to display the graphic image that corresponds to the audio source while an audio that corresponds to the audio source is being output.

7. The apparatus as claimed in any one of claim 1 to claim 6, wherein in response to a movement of the audio source, the processor is further configured to control the display to move and display the graphic image based on the movement of the audio source.

8. The apparatus as claimed in any one of claim 1 to claim 7, wherein the processor is further configured to obtain subtitle information that corresponds to a voice which is uttered by the audio source, and to control the display to display a subtitle that corresponds to the audio source on the area that corresponds to the determined direction of the audio source.

9. The apparatus as claimed in any one of claim 1 to claim 8, wherein the processor controls the display to determine a type of the audio source, and select and display one of a plurality of graphic images corresponding to a plurality of audio sources according to the determined type of audio source.

10. A method for controlling a display apparatus, the method comprising:
displaying an image;
determining a relative direction of an audio source with respect to the displayed image by analyzing an audio signal that relates to the image; and
displaying a graphic image in an area that corresponds to the determined direction of the audio source.

11. The method as claimed in claim 10, wherein in response to the audio signal being an audio signal which includes a plurality of channels, the determining comprises determining the direction of the audio source by comparing a respective intensity of a corresponding audio signal of each of the plurality of channels.

12. The method as claimed in claim 10 or claim 11, further comprising:
determining a type of the audio source by analyzing a frequency component of the audio signal that relates to the image,
wherein the displaying the graphic image comprises displaying a graphic image that includes an indicator which indicates the determined type of the audio source in the area that corresponds to the determined direction of the audio source.

13. The method as claimed in any one of claim 10 to claim 12, wherein the displaying the image comprises displaying each respective one from among a plurality of graphic images on a corresponding one from among a plurality of areas of the image,
wherein the displaying a graphic image comprises distinctively displaying a graphic image which is located at an area that corresponds to the determined direction of the audio source with respect to a display of a plurality of other graphic image.

14. The method as claimed in any one of claim 10 to claim 13, further comprising:
determining a volume level of an audio that corresponds to the audio source,
wherein the displaying the graphic image comprises adjusting and displaying a size of the graphic image based on the determined volume level.

15. The method as claimed in any one of claim 10 to claim 14, wherein the displaying the graphic image comprises displaying the graphic image that corresponds to the audio source while an audio that corresponds to the audio source is being output.
